# EUROPÄISCHE PATENTSCHRIFT

(11) **EP 2 715 199 B1**
(45) Veröffentlichungstag und Bekanntmachung des Hinweises auf die Patenterteilung: **27.08.2014**
(21) Anmeldenummer: 12720412.1
(22) Anmeldetag: 28.04.2012
(51) Int. Cl.: F16L 11/04, F16L 55/163, F16L 55/165, E03F 3/06

(54) **AUSKLEIDUNGSSCHLAUCH ZUR SANIERUNG VON DEFEKTEN ABWASSERKANÄLEN**
TUBULAR LINER FOR REHABILITATING DEFECTIVE SEWERS
GAINE DE CHEMISAGE DESTINÉE À LA RÉNOVATION DE CANALISATIONS D'EAUX USÉES DÉFECTUEUSES

(30) Priorität: 24.05.2011 DE 102011103001
(43) Veröffentlichungstag der Anmeldung: 09.04.2014
(73) Patentinhaber: Brandenburger Patentverwertung GBR, 76829 Landau (DE)
(72) Erfinder: DUTTENHÖFER, Peter, 76831 Ilbesheim (DE)
(74) Vertreter: Kesselhut, Wolf
(86) Internationale Anmeldenummer: PCT/EP2012/001843
(87) Internationale Veröffentlichungsnummer: WO 2012/159702

(56) Entgegenhaltungen:
- EP-A1- 0 863 359
- EP-A2- 0 454 309
- WO-A1-00/73692
- WO-A1-2009/021479
- US-A1- 2009 283 212

## Beschreibung

Die Erfindung betrifft einen Auskleidungsschlauch zur Sanierung von defekten Abwasserkanälen gemäß dem Oberbegriff von Anspruch 1.

Auf dem Gebiet der grabenlosen Sanierung von defekten Abwasserkanälen werden zunehmend Auskleidungsschläuche eingesetzt, die als "Inliner" bezeichnet werden und aus einem Fasermaterial, insbesondere aus Glasfasergewebe bestehen, welches mit einem flüssigen Reaktionsharz getränkt ist, das nach dem Einziehen des Auskleidungsschlauchs in die Rohrleitung und Expandieren desselben mit Hilfe von Druckluft durch Licht einer Strahlungsquelle ausgehärtet wird. Ein solcher Auskleidungsschlauch sowie ein Verfahren zur Herstellung eines solchen sind beispielsweise aus der WO-A 00/73692 bekannt, wobei der dort beschriebene Auskleidungsschlauch einen Innenfolienschlauch mit einer aufkaschierten Vliesschicht besitzt, auf den die harzgetränkten Faserbänder auf einem Wickeldorn überlappend aufgewickelt werden. Um den in dieser Weise hergestellten, umfänglich dehnbaren Faserschlauch gegen ein Aushärten durch das im Sonnenlicht enthaltene UV-Licht zu schützen, wird der Faserschlauch vor seinem Transport zu einer Baustelle mit einem lichtdichten Außenfolienschlauch umgeben, der im Anschluss an den Wickelvorgang fortlaufend in Form von zwei Längsbahnen herum gelegt wird, die an den Seitenrändern thermisch miteinander verschweißt werden. Der Außenfolienschlauch besteht üblicherweise aus einer in hohem Maße dehnbaren lichtundurchlässigen Folie, beispielsweise einer Polyesterfolie, die beim Expandieren des Faserschlauchs mittels Druckluft im zu sanierenden Kanal in gleichem Maße mit gedehnt wird, wie das Fasermaterial. Durch das Expandieren erweitert sich der Umfang des Faserschlauchs mitunter um bis zu 10 % des ursprünglichen Wertes, wodurch sicher gestellt wird, dass sich der Faserschlauch in gewissen Grenzen an unterschiedliche Kanaldurchmesser anpassen kann.

Um den Auskleidungsschlauch, der oftmals eine Länge bis zu 200 m oder mehr besitzt und mehrere Tonnen wiegen kann, in einen zu sanierenden Kanal einzuziehen, ohne den Außenfolienschlauch zu beschädigen, ist es bekannt, zuvor einen Schutzschlauch aus einem hoch reißfesten Material in den Kanal einzuziehen, der hervorstehende Vorsprünge und Kanten in der Kanalwand abdeckt und auf dem der Liner beim Einziehen entlang gleitet. Auch ist es bekannt, eine Gleitschutzfolie nur im Sohlenbereich des Kanals einzuziehen. Hierbei stellt es ein Problem dar, dass der Schutzschlauch - der auch als Preliner bezeichnet wird - bzw. die Gleitschutzfolie, nicht gleichzeitig mit dem Auskleidungsschlauch in den Kanal eingezogen werden kann, da in diesem Falle der Auskleidungsschlauch nicht gestrafft wird und sich in diesem überwerfende Falten bilden, die den Auskleidungsschlauch nach dem Aushärten in hohem Maße schwächen. Aufgrund des verminderten Dehnungsverhaltens ist es ferner nicht üblich, den Preliner während der Produktion des Auskleidungsschlauchs um diesen herum zu fertigen. Durch den hiermit verbundenen zusätzlichen Arbeitsschritt, der für Einziehen des Preliners erforderlich ist, erhöhen sich die Kosten für eine Sanierung von Abwasserkanälen beachtlich.

Demgemäß ist es eine Aufgabe der vorliegenden Erfindung, einen Auskleidungsschlauch für die Kanalsanierung zu schaffen, der sich gemeinsam mit einem diesen umgebenden Schutzschlauch aus einem reißfesten Werkstoff in einem Arbeitsgang im Wesentlichen faltenlos in einen zu sanierenden Abwasserkanal einziehen lässt.

Diese Aufgabe wird erfindungsgemäß durch die Merkmale von Anspruch 1gelöst.

Weitere Merkmale der Erfindung sind in den Unteransprüchen beschrieben.

Gemäß der Erfindung umfasst ein Auskleidungsschlauch zur Sanierung von Kanälen eine in Umfangsrichtung dehnbare Verstärkungslage, die insbesondere durch schraubenförmiges Wickeln eines Faserbandes auf einem Wickeldorn hergestellt wird, das mit einem lichhärtbaren Reaktionsharz getränkt ist. Der Wickeldorn ist hierbei in bekannter Weise bevorzugt durch einen Innenfolienschlauch bedeckt, um zu gewährleisten, dass die Verstärkungslage zusammen mit dem Innenfolienschlauch fortlaufend vom Wickeldorn abgeführt werden kann. Auf ihrer Außenseite ist die Verstärkungslage von einem Außenfolienschlauch umgeben, der aus einem für UV-Licht undurchlässigen Werkstoff, insbesondere aus einer thermisch verschweißbaren, flüssigkeits- und gasdichten Kunststofffolie, besteht. Die Verstärkungslage aus Fasermaterial, welches beispielsweise ein Glasfasergelege oder auch eine Kombination aus einem Glasfasergelege und einer Wirrfaserschicht, z.B. einer Vliesschicht umfassen kann, ist in gleicher Weise wie der Außenfolienschlauch in Umfangsrichtung radial dehnbar, beispielsweise auf bis zu 10 % des ursprünglichen Durchmessers, wenn der Auskleidungsschlauch nach dem Einziehen in einen zu sanierenden Kanal in bekannter Weise mit einem Druckfluid, bevorzugt mit Druckluft, beaufschlagt wird. Durch das umfängliche Dehnen des Auskleidungsschlauchs wird hierbei gewährleistet, dass sich dieser auch bei einem variierenden Kanaldurchmesser an die Innenwand des zu sanierenden Kanals anlegt und demgemäß der zur Verfügung stehende Querschnitt des Kanals auch nach dem Aushärten des Schlauchs soweit wie möglich erhalten bleibt. Nachdem der Auskleidungsschlauch in den Kanal eingezogen und expandiert wurde, wird das Reaktionsharz ausgehärtet, was bevorzugt dadurch erfolgt, dass eine UV-Lichtquelle durch den Innenraum des Auskleidungsschlauchs hindurch gezogen wird, die ein auf die im Reaktionsharz enthaltenen UV-Initiatoren abgestimmtes Wellenlängenspektrum emittiert.

Der erfindungsgemäße Auskleidungsschlauch zeichnet sich dadurch aus, dass um den Außenfolienschlauch herum ein Schutzschlauch aus einem reißfesten, nicht dehnbaren flüssigkeitsdichten Werkstoff angeordnet ist, der bevorzugt aus dem gleichen beschichteten textilen Material besteht, aus dem auch die Planen von LKWs gefertigt sind. Soweit nachfolgend von einem reißfesten Werkstoff gesprochen wird, so bedeutet dies insbesondere, dass das Material unter Anwendung der beim Einziehen des Auskleidungsschlauchs wirkenden Zugkräfte nicht einreißt, wenn sich der Schutzschlauch an einem Vorsprung oder Ecke innerhalb des zu sanierenden Kanals verhakt.

Der Schutzschlauch besitzt erfindungsgemäß einen Verbindungsabschnitt, der sich in Längsrichtung des Auskleidungsschlauchs, d.h. im Wesentlichen parallel zur Längsachse des Auskleidungsschlauchs, erstreckt, und der in erfindungsgemäßer Weise in Umfangsrichtung dehnbar ist, wenn der Auskleidungsschlauch mithilfe von Druckluft expandiert wird. Anders ausgedrückt besteht der Schutzschlauch aus einem reißfesten Werkstoff, welcher den innen liegenden empfindlichen Außenfolienschlauch beim Einziehen in den zu sanierenden Kanal vor Beschädigungen schützt, und welcher demgemäß einen gegenüber dem Außenfolienschlauch und der Verstärkungslage erheblich höheres Elastizitätsmodul aufweist, das bei den angewandten Drücken beim Expandieren des Auskleidungsschlauchs zu einer umfänglichen Dehnung von bevorzugt weniger als einem Prozent des Durchmessers führen würde. Demgegenüber besitzen der Außenfolienschlauch und die Verstärkungslage ein erheblich kleineres Elastizitätsmodul, das bevorzugt mehr als das Zehnfache des Dehnungskoeffizienten des Schutzschlauchs betragen kann.

Durch die Erfindung ergibt sich der Vorteil, dass der Auskleidungsschlauch durch den Schutzschlauch geschützt in einem Arbeitsgang im Wesentlichen frei von Falten in den zu sanierenden Kanal eingezogen werden kann, ohne dass die Gefahr besteht, dass der Auskleidungsschlauch sich im Anschluss an den Einziehvorgang nicht mehr in Umfangsrichtung dehnen kann, um sich an die Innenwand des Kanals anzulegen.

Bei der bevorzugten Ausführungsform der Erfindung wird der Schutzschlauch entlang eines sich wenigstens abschnittsweise in Längsrichtung des Auskleidungsschlauchs erstreckenden Kontaktabschnitts an der Außenseite des Außenfolienschlauchs fixiert, was bevorzugt mit Hilfe von doppelseitigem Klebeband erfolgt, welches nach dem Aufbringen des Außenfolienschlauchs auf die Verstärkungslage in der eingesetzten Wickelmaschine synchron mit der Abzugsgeschwindigkeit des Außenfolienschlauchs insbesondere auf dessen Unterseite abgerollt wird. Ebenso ist es jedoch denkbar, dass anstelle eines doppelseitigen Klebebandes eine Klebstoffnaht, z.B. Heißklebstoff und/oder eine thermische Schweißnaht zwischen dem Außenfolienschlauch und dem Schutzschlauch erzeugt wird, die sich - bezogen auf den in einem Kanal eingesetzten Auskleidungsschlauch - an dessen Unterseite befindet. Hierdurch ergibt sich der Vorteil, dass die Kräfte, die zum Einziehen des Auskleidungsschlauchs bevorzugt in den Schutzschlauch eingeleitet werden, beispielsweise über ein entsprechend dimensioniertes Zugseil, in erster Linie in den Bodenbereich des Auskleidungsschlauchs eingeleitet werden, was die Faltenbildung nahezu vollständig verhindert. Es versteht sich, dass ebenso weitere Kontaktabschnitte in den seitlichen Bereichen, beispielsweise im Bereich von 3 Uhr und 9 Uhr, vorgesehen werden können, um die Faltenbildung insbesondere bei Auskleidungsschläuchen mit sehr großen Durchmessern gegebenenfalls weiter zu verringern. Als Alternative zum Einziehen des Auskleidungsschlauchs in den zu sanierenden Kanal mittel eines Zugseils kann dieser bei sämtlichen Ausführungsformen in bekannter Weise auch mit Hilfe von Druckluft, Wasser oder einem sonstigen Fluid ähnlich einem Strumpf von innen nach außen in den Kanal hinein umgestülpt werden.

Bei dem eingesetzten Klebstoff handelt es sich bevorzugt um einen dauerelastischen und dauerklebrigen Klebstoff, wie er auch bei Klebebändern zum Einsatz gelangt, und der bei der Einwirkung von Scherkräften eine umfängliche Verschiebung des Außenfolienschlauchs gegenüber der Innenseite des Schutzschlauchs erlaubt. Dies kann durch Einbringen eines zusätzlichen Gleitstoffs, beispielsweise von Teflon, oder Schmierseife oder durch eine Reibung vermindernde Materialpaarung zwischen der Außenseite des Außenfolienschlauchs und der Innenseite des Schutzschlauchs, weiter begünstigt werden.

Bei der bevorzugten Ausführungsform der Erfindung besteht der Schutzschlauch aus einem oder auch aus mehreren umfänglichen Teilbahnen des reißfesten Werkstoffs, wobei die beiden aneinander angrenzenden Längsabschnitte der einen oder auch mehreren Teilbahnen des Werkstoffs in einem Überlappungsbereich übereinander geführt sind und der dehnbare Verbindungsabschnitt eine sich in Längsrichtung des Auskleidungsschlauchs erstreckende Sollrissstelle aufweist, entlang von welcher die Längsabschnitte des Schutzschlauchs im Wesentlichen flüssigkeitsdicht miteinander verbunden sind.

Hierdurch ergibt sich der Vorteil, dass der Schutzschlauch aus einem einzigen nicht dehnbahren und insbesondere reißfesten Werkstoff, bevorzugt aus dem Material einer Lkw -Plane hergestellt werden kann. Das nicht dehnbare Material des Schutzschlauchs wird in vorteilhafte Weise als Rollenware vorkonfektioniert und bei der fortlaufenden Produktion des Auskleidungsschlauchs unmittelbar nach dem Aufbringen des Außenfolienschlauchs fortlaufend um diesen herum angeordnet, z.B. über eine bekannte Formschulter. Unmittelbar im Anschluss daran wird der Schutzschlauch entlang der Sollrissstelle flüssigkeits- und gasdicht verschlossen. Bevorzugt kommen hierbei zwei Teilbahnen des nicht dehnbaren Materials zum Einsatz, um das Handling der Rollenware auch bei großen Durchmessern des Auskleidungsschlauchs zu erleichtern.

Das Verschließen der einander überlappenden Längsabschnitte des nicht dehnbaren, reißfesten Werkstoffs erfolgt hierbei bevorzugt mit Hilfe von Klebeband oder doppelseitigem Klebeband, das entlang der Sollrissstelle im Überlappungsbereich auf oder zwischen den aneinander angrenzenden Abschnitten des reißfesten Werkstoffs angeordnet wird. Das Klebeband kann hierbei ähnlich wie in der zuvor beschriebenen Weise fortlaufend während des Fertigungsprozesses auf den Überlappungsbereich bzw. auf den Schutzschlauch aufgerollt werden, bevor die Innenseite des außen liegenden Abschnitts der Längskante über den Bereich der innen liegenden Längskante geführt wird. Hierdurch ergibt sich der Vorteil, dass der Verbund aus Auskleidungsschlauch und Schutzschlauch sehr kostengünstig in einem Verfahrensschritt gefertigt werden kann, was die Produktionskosten reduziert. Es versteht sich, dass das einseitig klebende Klebeband oder doppelseitige Klebeband mit einem dauerelastischen und dauerklebrigen Klebstoff beschichtet ist, dessen Kraftwirkung ausreicht, um die miteinander verklebten Längsabschnitte des reißfesten Werkstoffs aneinander zu fixieren, der jedoch bei den in Umfangsrichtung wirkenden Scherkräften aufbricht und eine umfängliche Verschiebung der Abschnitte ermöglicht. Um die Klebeeigenschaften des Klebstoffes hierbei auf die jeweiligen Materialien des Schutzschlauchs sowie die Kanaldurchmesser und umfänglichen Zugkräfte anpassen zu können, wird bevorzugt die Breite des doppelseitigen Klebebands und/oder die Anzahl von nebeneinander liegenden Klebebandstreifen verändert und auf die jeweiligen Verhältnisse abgestimmt. Alternativ oder gleichzeitig besteht ebenfalls die Möglichkeit, die maximalen Scherkräfte, bei denen die Sollrissstelle beim Expandieren des Auskleidungsschlauchs aufreißt, dadurch zu variieren, dass die Trägerschicht des Klebebandes in ihrer Dicke und/oder in ihren Materialeigenschaften verändert wird. Hierbei lässt sich durch eine Vergrößerung der Dicke der Trägerschicht, z.B. von 1mm auf 3mm oder mehr, die maximale Scherbelastbarkeit gezielt herabsetzen.

Nach einem weiteren der Erfindung zu Grunde liegenden Gedanken umfasst die Sollrissstelle eine Klebstoffraupe, welche die aneinander angrenzenden Abschnitte der Überlappungsbereiche flüssigkeitsdicht miteinander verbindet. Die Klebstoffraupe kann beispielsweise aus Heißklebstoff bestehen, der bei der Fertigung des Auskleidungsschlauchs auf die einander überlappenden Längsabschnitte des bevorzugt bahnförmigen reißfesten Werkstoffs über eine Düse aufgespritzt wird.

Ebenso besteht die Möglichkeit, den reißfesten Werkstoff mit einem thermisch verschweißbaren Material zu beschichten, oder einen reißfesten, nicht dehnbaren Werkstoff aus einem thermisch verschweißbaren Material zu verwenden, der durch eine bekannte thermische Schweißeinrichtung, beispielsweise ein Heißluftgebläse, im Überlappungsbereich erhitzt wird, bevor die aneinander angrenzenden Längsabschnitte beispielsweise durch eine Andruckrolle gegeneinander gedrückt werden.

Die aufgebrachte Klebstoffraupe, bzw. die erzeugte thermische Schweißnaht kann bei einer weiteren Ausführungsform der Erfindung innerhalb des Überlappungsbereichs einen wellenlinienförmigen oder zick-zack-förmigen Verlauf besitzen, um einerseits ein Aufbrechen der Sollrissstelle beim Expandieren des Auskleidungsschlauchs zu begünstigen und andererseits sicher zu stellen, dass die beim Einziehen des Schutzschlauchs entlang der Sollrissstelle wirkenden Zugkräfte nicht dazu führen, dass die bevorzugt flüssigkeitsdichte Verbindung bereits vor dem Expandieren des Auskleidungsschlauchs in Längsrichtung aufbricht.

Gemäß einer Weiterbildung des erfindungsgemäßen Gedankens ist der Klebstoff der Kleberaupe ein schmelzbarer Klebstoff, der unter Einwirkung von Hitze verflüssigbar ist. Der Klebstoff kann z.B. ein Heißklebstoff sein, wie er bekanntermaßen in Heißklebepistolen zum Einsatz gelangt. Die Klebstoffraupe enthält bei dieser Ausführungsform wenigstens einen Heizdraht, der durch Anlegen einer elektrischen Spannung erhitzt werden kann, um den Klebstoff zu verflüssigen und dadurch die Sollrissstelle für eine umfängliche Dehnung des Schutzschlauchs beim Expandieren des Auskleidungsschlauchs zu öffnen.

Bei einer weiteren Ausführungsform der Erfindung weist die Sollrissstelle eine in den Schutzschlauch eingebrachte Längsperforation auf, die bevorzugt von lediglich einer Seite her in den nicht dehnbaren Werkstoff eingebracht ist, um ein Eindringen von Feuchtigkeit in den Auskleidungsschlauch, insbesondere in die Verstärkungslage, zu verhindern, wenn der Auskleidungsschlauch in einen Kanal eingezogen wird, in dem sich noch Reste von Abwasser befinden. Alternativ besteht die Möglichkeit, den nicht dehnbaren, reißfesten Werkstoff über seine gesamte Dicke hinweg mit Löchern oder Schlitzen zu perforieren, und diese anschließend durch eine elastische Dichtmasse, z.B. einen Klebebandstreifen, abzudecken, welcher schon durch geringe Scherkräfte gelöst werden kann. Durch eine Variation des Abstandes und/oder der Tiefe und/oder der Länge der eingebrachten Perforationsöffnungen lässt sich hierbei die maximale Haltekraft verändern, bei der die Sollrissstelle beim Expandieren des Auskleidungsschlauchs aufreißt. Die zuvor beschriebene Ausführungsform der Erfindung besitzt den Vorteil, dass die Längsperforation bereits schon beim Vorkonfektionieren des Bahnmaterials, aus dem der Schutzschlauch gefertigt wird, z.B. mit Hilfe eines Lasers oder eines Stanzwerkzeugs, in wohl definierter Weise eingebracht werden kann, wodurch der Toleranzbereich für die gewünschten maximalen Haltekräfte klein gehalten werden kann.

Nach einem weiteren der Erfindung zugrunde liegenden Gedanken wird in dem dehnbaren Verbindungsabschnitt des Schutzschlauchs eine sich in Längsrichtung des Auskleidungsschlauchs erstreckende Klebstoffraupe aus einem dauerklebrigen Klebstoff angeordnet, die bevorzugt eine im Querschnitt kreisrunde oder ovale Form aufweist und sich beim Expandieren des Auskleidungsschlauchs in Umfangsrichtung zwischen den aneinander angrenzenden Abschnitten des Überlappungsbereichs abrollt. Die Klebstoffraupe kann hierbei ähnlich einer Dichtenschnur ausgestaltet sein, und beispielsweise einen Kern besitzen, der aus einem elastischen und verformbaren Material besteht, welches mit einem dauerklebrigen Klebstoff beschichtet ist, ähnlich, wie er bei doppelseitigen Klebebändern zum Einsatz kommt. Diese Ausführungsform der Erfindung besitzt den Vorteil, dass sich die überlappenden Abschnitte der einen oder mehreren Bahnen des Schutzschlauchs beim Expandieren des Auskleidungsschlauchs in Umfangsrichtung relativ zueinander verschieben können, ohne dass die Dichtwirkung der Klebstoffraupe aufgehoben wird und Flüssigkeit durch den Schutzschlauch hindurch in die Verstärkungslage eindringen und dort zu einer Verseifung des Reaktionsharzes führen kann. Ebenso wenig können toxische Substanzen aus dem Reaktionsharz durch mögliche Risse im Außenfolienschlauch sowie durch den Schutzschlauch hindurch in das Erdreich eindringen, wenn der Außenfolienschlauch beim Einziehen des Liners beschädigt werden sollte.

Bei einer weiteren Ausführungsform der Erfmdung erstreckt sich der reißfeste, nicht dehnbare Werkstoff des Schutzschlauchs, der bevorzugt als Teilbahn vorliegt, lediglich um einen ersten umfänglichen Teilabschnitt des Außenfolienschlauchs herum, und der dehnbare Verbindungsabschnitt umfasst einen zweiten umfänglichen Teilabschnitt aus einem gegenüber dem ersten Teilabschnitt dehnbaren Werkstoff, d.h. aus einem Werkstoff, der ein erheblich geringeres Elastizitätsmodul, bzw. ein erheblich größeres, beispielsweise um einen Faktor 5 bis 10 oder mehr größeres Dehnungsvermögen besitzt, als der erste Teilabschnitt. Die bevorzugt als bahnförmiges Material vorliegenden ersten und zweiten Teilabschnitte sind hierbei entlang Ihrer beiden Längskanten flüssigkeitsdicht miteinander verklebt oder über eine thermische Schweißverbindung oder dergleichen miteinander verbunden, so dass beim Expandieren des Auskleidungsschlauchs im Wesentlichen ausschließlich der zweite Teilabschnitt in Umfangsrichtung gedehnt wird. Der zweite Teilabschnitt besteht beispielsweise aus einer Kunststofffolie, beispielsweise aus einer PVC- oder einer Polyethylenfolie, die bevorzugt auch aus demselben Werkstoff wie der Außenfolienschlauch besteht. Es versteht sich jedoch, dass die zweite Teilbahn, die beispielsweise lediglich 10% bis 30% des Umfangs des Schutzschlauchs einnimmt und bevorzugt im Bereich der Oberseite des Auskleidungsschlauchs verläuft, ebenso aus einem anderen Kunststoffmaterial oder aus einem gummielastischen Werkstoff bestehen kann. Die zuletzt beschriebene Ausführungsform der Erfindung besitzt den Vorteil, dass ein gegenüber dem nicht reißbaren Material des ersten Teilabschnitts erheblich kostengünstigeres Material zum Einsatz gelangen kann, das insbesondere dann, wenn es an der Oberseite des bereits im Kanal verlegten Auskleidungsschlauchs angeordnet ist, beim Einziehen des Auskleidungsschlauchs in den zu sanierenden Kanal nur einer vergleichsweise geringen Belastung ausgesetzt ist, da die Reibunskräfte zum Einziehen des Auskleidungsschlauchs in erster Linie über den reißfesten ersten Teilabschnitt eingeleitet werden, auf welchem in diesem Falle das gesamte Gewicht des Auskleidungsschlauchs aufliegt.

Bei dieser Ausführungsform der Erfindung besteht weiterhin die Möglichkeit, den zweiten Teilabschnitt aus einem thermisch verschweißbaren Kunststoffmaterial zu fertigen, welches im Bereich der Längskanten mit der in diesem Falle ebenfalls thermisch verschweißbaren Beschichtung des reißfesten Materials verbunden ist. Im Überlappungsbereich, bzw. direkt auf dem ersten Teilabschnitt, ist ein Heizdraht angeordnet, der beim Expandieren des Auskleidungsschlauchs mit einer Stromquelle verbunden wird, um das Kunststoffmaterial des zweiten Teilabschnitts zu schmelzen und auf diese Weise zu durchtrennen. Hierdurch ergibt sich der Vorteil, dass der Zeitpunkt, zu welchem der zweite Teilabschnitt geöffnet und dadurch der Schutzschlauch in Umfangsrichtung aufgeweitet werden kann, frei wählbar ist, ohne dass hierzu eine besondere Abstimmung der Sollrissstellen und Klebeverbindung auf die jeweiligen Kanaldurchmesser und Kanalquerschnittsformen erforderlich ist.

Nach einem weiteren der Erfindung zugrundeliegenden Gedanken kann zwischen dem Außenfolienschlauch und der Innenseite des Schutzschlauchs ein Gleitmittel eingebracht werden, beispielsweise Schmierseife oder Teflon oder dergleichen, wodurch sich der Vorteil ergibt, dass sich der Außenfolienschlauch beim Einbringen der Druckluft in den Auskleidungsschlauch relativ zum anfänglich nicht dehnbaren Schutzschlauch leicht verschieben kann. Dies bewirkt, dass sich der Schutzschlauch, insbesondere dann, wenn dieser mit einer zusätzlichen äußeren Gleitbeschichtung versehen ist, sowie auch der Außenfolienschlauch und die Verstärkungslage, erheblich besser einer vorgegebenen Kanal-Querschnittsform anpassen können und diese dadurch im Wesentlichen vollständig ausfüllen. Nachteilige nicht ausgefüllte Hohlräume können dadurch vermieden werden. Dies führt insbesondere bei Abwasserkanälen mit ovalen Querschnittsformen zu einer erheblich verbesserten Ausnutzung der durch den zu sanierenden Abwasserkanal vorgegebenen Durchflussquerschnitte.

Die Erfindung wird nachfolgend mit Bezug auf die Zeichnungen beschrieben:
In den Zeichnungen zeigen:

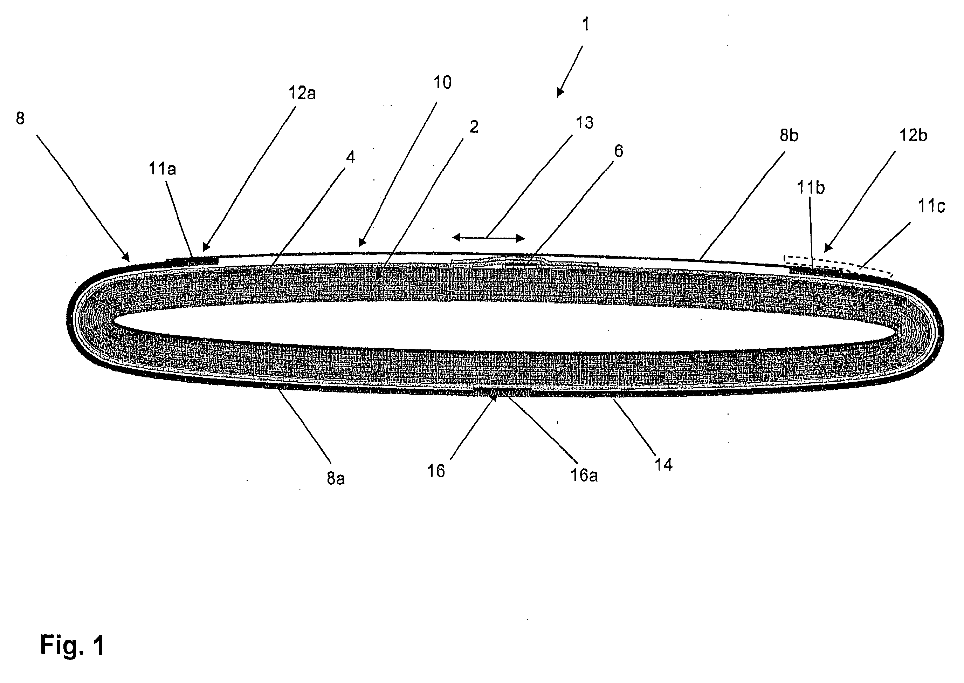

- Fig. 1: eine Querschnittsansicht einer ersten Ausfühnmgsform des erfindungsgemäßen Auskleidungsschlauchs, bei der der Schutzschlauch einen ersten Teilabschnitt aus einem reißfesten, in Umfangsrichtung nur schwer dehnbaren Werkstoff sowie einen zweiten Teilabschnitt aus einem zweiten, in Umfangsrichtung gut dehnbaren Werkstoff umfasst,

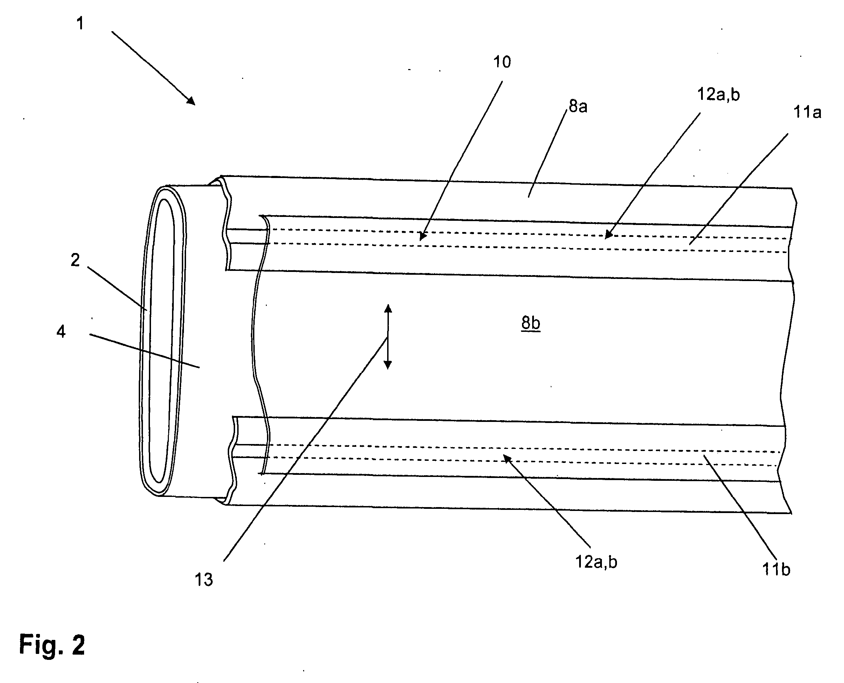

- Fig. 2: eine Aufsicht auf den Auskleidungsschlauch von Fig.1 zur Verdeutlichung der Längsabschnitte, in denen der erste Teilabschnitt und der zweite Teilabschnitt miteinander verbunden sind,

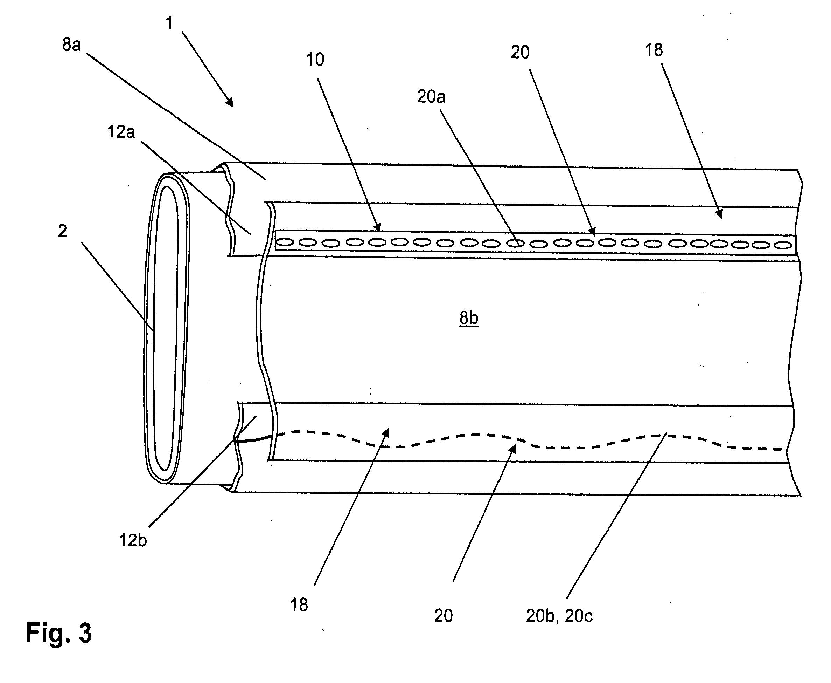

- Fig. 3: eine Aufsicht auf eine weitere Ausführungsform eines erfindungsgemäßen Auskleidungsschlauchs, bei der der Schutzschlauch eine erste Teilbahn aus nicht dehnbarem Werkstoff und eine mit dieser über zwei einander überlappende Verbindungsabschnitte verbundene zweite Teilbahn aus einem ebenfalls nicht dehnbaren Werkstoff umfasst, die über eine wellenlinienförmige, bzw. geradlinige Sollbruchstelle miteinander verbunden sind,

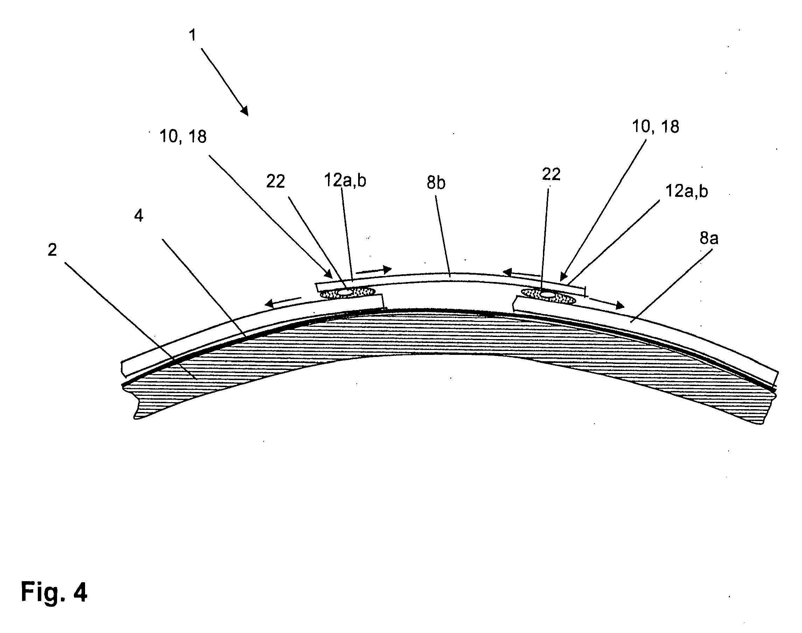

- Fig. 4: eine Querschnittansicht durch einen Auskleidungsschlauch gemäß einer weiteren Ausführungsform der Erfindung, bei der der Schutzschlauch einen ersten Teilabschnitt aus nicht dehnbarem Material und einen zweiten Teilabschnitt aus einem ebenfalls nicht dehnbarem Material umfasst, der in den Überlappungsbereichen über eine in Umfangsrichtung verschiebbare Klebeverbindung miteinander verbunden sind, und

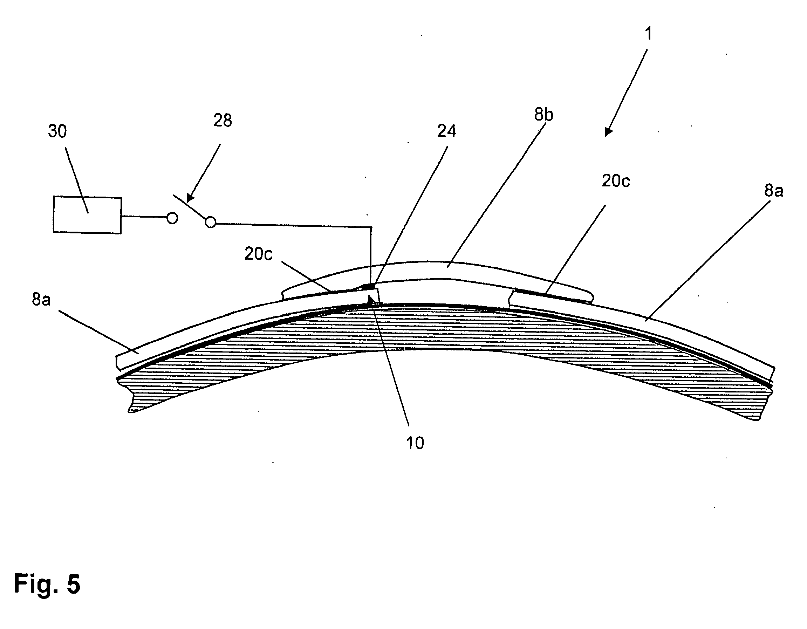

- Fig. 5: eine weitere Ausführungsform eines erfindungsgemäßen Auskleidungsschlauchs, bei der der Schutzschlauch einen ersten Teilabschnitt aus einem nicht dehnbaren Werkstoff und einem zweiten Umfangsabschnitt aus einem dehnbaren oder auch nicht dehnbaren Werkstoff umfasst, zwischen denen ein elektrisch beheizbarer Heizdraht eingebracht ist, mittels welchem die Klebeverbindung oder thermische Schweißverbindung im Überlappbereich durch Anlegen eines elektrischen Stroms geöffnet werden kann.

Wie in der Darstellung von Fig. 1 gezeigt ist, umfasst ein Auskleidungsschlauch 1 zur Sanierung von nicht näher gezeigten Kanälen und Abwasserleitungen eine bevorzugt mehrschichtige Verstärkungslage 2 aus mit einem flüssigen Reaktionsharz getränktem Glasfasergewebe, die von einem Außenfolienschlauch 4 aus einem für UV-Licht undurchlässigen und flüssigkeitsdichtem Material gefertigt ist, welches in Umfangsrichtung eine Dehnung von 10 % oder mehr des ursprünglichen Durchmessers erlaubt, wenn der Auskleidungsschlauch 1 nach dem Einbringen in einen zu sanierenden Kanal durch Druckluft expandiert wird. Der Außenfolienschlauch besteht bevorzugt aus einer thermisch verschweißbaren Kunststofffolienbahn, die im Bereich einer Längsnaht 6 an ihren Längskanten flüssigkeitsdicht zu einem Schlauch verbunden ist. Um den Außenfolienschlauch herum ist ein eng an diesem anliegender flüssigkeitsdichter Schutzschlauch 8 angeordnet, der einen ersten Teilabschnitt 8a aus einem schwer dehnbaren Material - nachfolgend als nicht dehnbarer Werkstoff bezeichnet - und einen zweiten Teilabschnitt 8b aus einem gut dehnbaren Material besitzt, welch letzter nachfolgend als dehnbarer Werkstoff bezeichnet wird. Der nicht dehnbare Werkstoff ist dabei bevorzugt ein beschichtetes und in hohem Maße reißfestes Textilgewebe, wie es bei LKW-Planen zum Einsatz gelangt, und der dehnbare Werkstoff besteht bevorzugt aus einer Kunststofffolie. Wie der Darstellung von Fig. 1 und auch Fig. 2 weiterhin entnommen werden kann, erstreckt sich der erste umfängliche Teilabschnitt 8a auf der Unterseite des Auskleidungsschlauchs 1 über mehr als den halben Umfang des Auskleidungsschlauchs hinweg, und ist - bei einem flach liegenden Auskleidungsschlauch - auf dessen Oberseite entlang von zwei einander überlappenden Längsabschnitten 12a, 12b durch eine thermische Schweißverbindung oder auch eine Klebeverbindung, z.B. ein doppelseitiges Klebeband 11a und 11b oder ein von oben her aufgeklebtes einseitig mit Klebstoff beschichtetes Klebeband 11c, welches als Alternative in gestrichelten Linien in Fig. 1 angedeutete ist, mit dem zweiten dehnbaren Teilabschnitt 8b verbunden. Der zweite dehnbare Teilabschnitt 8b stellt hierbei einen in Umfangsrichtung in hohem Maße dehnbaren Verbindungsabschnitt 10 dar, was durch den Doppelpfeil 13 in Fig. 1 und 2 angedeutet ist. Im Bereich seiner Unterseite 14 ist der erste Teilabschnitt 8a des Schutzschlauchs 8 über eine Kontaktstelle 16 mit der Außenseite des Außenfolienschlauchs 4 verbunden, die bevorzugt ein doppelseitiges Klebeband 16a aufweist. Zwischen der Innenseite des Schutzschlauchs 8 und der Außenseite des Außenfolienschlauchs 4 kann ein nicht näher dargestelltes Gleitmaterial, z.B. Teflon oder Schmierseife oder dergleichen, eingebracht sein, um eine Relativbewegung zwischen dem Außenfolienschlauch 4 und dem Schutzschlauch 8 außerhalb des Kontaktbereichs 16 beim Expandieren des Auskleidungsschlauchs 1 zu ermöglichen.

Bei der in Fig. 3 gezeigten Ausführungsform der Erfindung besteht auch der zweite umfängliche Teilabschnitt 8b aus einem nicht dehnbaren Material, vorzugsweise aus dem selben Material wie der erste umfängliche Teilabschnitt des Schutzschlauchs 8. Der reißfeste Werkstoff der beiden umfänglichen Teilabschnitte 8a, 8b des bahnförmigen nicht dehnbaren Werkstoffs ist im Bereich seiner Längsabschnitte 12a 12b in einem Überlappungsbereich 18 übereinander geführt, und der dehnbare Verbindungsabschnitt 10 umfasst in diesem Falle eine sich in Längsrichtung des Auskleidungsschlauchs 1 erstreckende Sollrissstelle 20, entlang von welcher die jeweiligen Längsabschnitte 12a, 12b des Schutzschlauchs 8 vor dem Expandieren des Auskleidungsschlauchs 1 flüssigkeitsdicht miteinander verbunden sind. Wie in Fig. 3 hierbei schematisch angedeutet ist, kann die Sollrissstelle 20 eine Längsperforation 20a, oder auch eine Klebstoffraupe 20b oder thermische Schweißnaht 20c umfassen, welche sowohl geradlinig als auch wellenlinienförmig verlaufen können. Die Sollrissstellen 20a, 20b und 20c sind so ausgelegt, dass sie in Längsrichtung des Auskleidungsschlauchs 1 aufreißen und eine umfängliche Dehnung des an sich nicht dehnbaren Schutzschlauchs 8 ermöglichen, wenn der Auskleidungsschlauch 1 durch Einbringen von Druckluft in den Bereich innerhalb der Verstärkungslage 2 gedehnt wird, die zum Zentrum des Auskleidungsschlauchs hin bevorzugt noch einen nicht näher gezeigten ebenfalls dehnbaren Innenfolienschlauch abgedeckt ist.

Bei der in Fig. 4 gezeigten Ausführungsform der Erfindung sind die Teilbahnen 8a, 8b des reißfesten Werkstoff des Schutzschlauchs 10 im Bereich ihrer Längsabschnitte 12a, 12b im jeweiligen Überlappungsbereich 18 durch eine sich in Längsrichtung des Auskleidungsschlauchs 1 erstreckende Klebstoffraupe 22 aus einem dauerklebrigen Klebstoff verbunden, die den dehnbaren Verbindungsabschnitt 10 bildet oder definiert. Die Klebstoffraupe 22 besitzt eine im Querschnitt kreisrunde oder ovale Form und rollt beim Expandieren des Auskleidungsschlauchs 1 im Überlappungsbereich 18 der beiden aneinander angrenzenden Teilabschnitte 8a, 8b des Schutzschlauchs 8 in Umfangsrichtung zwischen diesen ab, um beim Einbringen von Druckluft eine umfängliche Dehnung des Schutzschlauchs 8 aus nicht dehnbarem Werkstoff zu ermöglichen.

Schließlich kann gemäß der Ausführungsform von Fig. 5 zwischen dem ersten Teilabschnitt 8a aus nicht dehnbarem Werkstoff und dem zweiten Teilabschnitt 8b aus einem dehnbaren oder auch nicht dehnbaren Werkstoff ein Heizdraht 24 angeordnet sein, der entweder in einer nicht näher gezeigten Klebstoffraupe aus einem schmelzbaren Klebstoff, z.B. Heißklebstoff, angeordnet ist, oder aber direkt im Überlappungsbereich 18 verläuft, in dem die Längsabschnitte 12a, 12 durch eine thermische Schweißnaht miteinander verbunden sind. Der Heizdraht 24 kann ebenso direkt auf die Unterseite des zweiten Teilabschnitts 8b aufgebracht sein, z.B. mittels eines Klebestreifens bei der Herstellung der jeweiligen Teilbahn aufgeklebt sein, die in diesem Falle selbst aus einem thermisch schmelzbaren Kunststoffmaterial besteht. Der Heizdraht ist - wie angedeutet - über einen Schalter 28 mit einer Stromquelle 30 verbindbar, um den Heizdraht nach dem Einziehen des Auskleidungsschlauchs 1 in einen Kanal zu erwärmen, wenn der Auskleidungsschlauch 1 expandiert wird, um die in diesem Falle durch den Heizdraht definierte dehnbare Verbindungsstelle 10 durch Schmelzen des Materials zu öffnen.

### Bezugszeichenliste

- 1: Auskleidungsschlauch
- 2: Verstärkungslage
- 4: Außenfolienschlauch
- 6: Schweißnaht an Außenfolienschlauch
- 8: Schutzschlauch
- 8a: erste Teilabschnitt/Teilbahn des Schutzschlauchs
- 8b: zweiter Teilabschnitt/Teilbahn des Schutzschlauchs
- 10: dehnbarer Verbindungsabschnitt
- 11a: doppelseitiges Klebeband
- 11b: doppelseitiges Klebeband
- 11c: einseitig klebendes Klebeband
- 12a: erster Längsabschnitt
- 12b: zweiter Längsabschnitt
- 13: Doppelpfeil
- 14: Unterseite des Auskleidungsschlauchs
- 16: Kontaktstelle
- 16a: doppelseitiges Klebeband
- 18: Überlappungsbereich
- 20: Sollrissstelle
- 20a: Längsperforation
- 20b: Klebstoffraupe
- 20c: thermische Schweißnaht
- 22: abrollende Klebstoffraupe aus dauerelastischem Klebstoff
- 24: Heizdraht
- 28: Schalter
- 30: Stromquelle

## Patentansprüche

1. Auskleidungsschlauch (1) zur Sanierung von Kanälen, mit einer in Umfangsrichtung dehnbaren, mit einem lichhärtbaren Reaktionsharz getränkten Verstärkungslage (2) sowie einem die Verstärkungslage (2) umgebenden Außenfolienschlauch (4), der aus einem radial dehnbaren und für UV-Licht undurchlässigen Werkstoff, bevorzugt aus einer flüssigkeits- und gasdichten Kunststofffolie, besteht, wobei der Auskleidungsschlauch (1) in einen zu sanierenden Kanal einbringbar und insbesondere mit Hilfe von Druckluft expandierbar ist, so dass sich die Verstärkungslage (2) und der Außenfolienschlauch (4) vor dem Aushärten des Reaktionsharzes an die Innenwand des Kanals anlegen,
**dadurch gekennzeichnet,**
**dass** um den Außenfolienschlauch (4) herum ein Schutzschlauch (8) aus einem reißfesten Werkstoff angeordnet ist, der einen sich in Längsrichtung des Außenfolienschlauchs (4) erstreckenden Verbindungsabschnitt (10) aufweist, welcher durch Einbringen von Druckluft in den Auskleidungsschlauch (1) in Umfangsrichtung dehnbar ist.

2. Auskleidungsschlauch nach Anspruch 1,
**dadurch gekennzeichnet,**
**dass** der Schutzschlauch (8) entlang eines sich wenigstens abschnittsweise in Längsrichtung des Auskleidungsschlauchs (1) erstreckenden Kontaktabschnitts (16) an der Außenseite des Außenfolienschlauchs (4) fixiert ist.

3. Auskleidungsschlauch nach Anspruch 2,
**dadurch gekennzeichnet,**
**dass** der Kontaktabschnitt (16) ein doppelseitiges Klebeband (16a) und/oder eine Klebstoff- naht und/oder eine thermische Schweißnaht umfasst, die bezogen auf den in einen Kanal eingezogenen Auskleidungsschlauch (1) im Bereich der Unterseite (14) des Auskleidungsschlauchs verläuft.

4. Auskleidungsschlauch nach einem der Ansprüche 1 bis 3,
**dadurch gekennzeichnet,**
**dass** der reißfeste Werkstoff des Schutzschlauchs im Bereich seiner Längsabschnitte (12a, 12b) in einem Überlappungsbereich (18) übereinander geführt ist, und dass der dehnbare Verbindungsabschnitt (10) eine sich in Längsrichtung des Auskleidungsschlauchs (1) erstreckende Sollrissstelle (20) umfasst, entlang von welcher die Längsabschnitte (12a, 12b) des Schutzschlauchs (8) vor dem Expandieren des Auskleidungsschlauchs (1) im Wesentlichen flüssigkeitsdicht miteinander verbunden sind.

5. Auskleidungsschlauch nach Anspruch 4,
**dadurch gekennzeichnet,**
**dass** die Sollrissstelle (20) ein im Bereich der Längsabschnitte (12a, 12b) auf die Außenseite des Schutzschlauchs (8) aufgeklebtes einseitig klebendes Klebeband (11c) enthält oder ein doppelseitiges Klebeband (11a, 11b) umfasst, welches entlang des Überlappungsbereichs zwischen den aneinander angrenzenden Abschnitten (12a, 12b) des reißfesten Werkstoffs angeordnet ist und diese aneinander fixiert.

6. Auskleidungsschlauch nach Anspruch 4,
**dadurch gekennzeichnet,**
**dass** die Sollrissstelle (20) eine thermische Schweißnaht (20c) oder eine Klebstoffraupe (20b) umfasst, welche die aneinander angrenzenden Abschnitte der Überlappungsbereiche (18) flüssigkeitsdicht miteinander verbindet.

7. Auskleidungsschlauch nach Anspruch 6,
**dadurch gekennzeichnet,**
**dass** die thermische Schweißnaht (20b) oder Klebstoffraupe (20b) innerhalb des Überlappungsbereichs (18) wellenlinienförmig oder zick-zack-förmig verläuft.

8. Auskleidungsschlauch nach einem der Ansprüche 5 bis 7,
**dadurch gekennzeichnet,**
**dass** die Sollrissstelle (20) einen Heizdraht (24) und ein unter Hitzeeinwirkung verflüssigbares Material, insbesondere einen Heißklebstoff, enthält.

9. Auskleidungsschlauch nach einem der Ansprüche 4 bis 8,
**dadurch gekennzeichnet,**
**dass** die Sollrissstelle (20) eine in den Schutzschlauch (8) eingebrachte Längsperforation (20a) umfasst, die bevorzugt von lediglich einer Seite her in den nicht dehnbaren Werkstoff eingebracht ist und diesen nur teilweise durchdringt oder die durch eine elastische Dichtmasse flüssigkeitsdicht abgedeckt ist.

10. Auskleidungsschlauch nach einem der Ansprüche 1 bis 3,
**dadurch gekennzeichnet,**
**dass** der reißfeste Werkstoff des Schutzschlauchs (8) im Bereich seiner Längsabschnitte (12a, 12b) in einem Überlappungsbereich übereinander geführt ist, und dass der dehnbare Verbindungsabschnitt (10) eine sich in Längsrichtung des Auskleidungsschlauchs (1) erstreckende Klebstoffraupe (22) aus einem dauerklebrigen Klebstoff umfasst, die eine im Querschnitt kreisrunde oder ovale Form aufweist und sich beim Expandieren des Auskleidungsschlauchs in Umfangsrichtung zwischen den aneinander angrenzenden Abschnitten des Überlappungsbereichs abrollt.

11. Auskleidungsschlauch nach einem der Ansprüche 1 bis 3,
**dadurch gekennzeichnet,**
**dass** sich der nicht dehnbare Werkstoff des Schutzschlauchs (8) lediglich um einen ersten umfänglichen Teilabschnitt (8a) des Außenfolienschlauchs (4) herum erstreckt, und dass der Schutzschlauch (8) einen zweiten umfänglichen Teilabschnitt (8b) aus einem dehnbaren oder nicht dehnbaren Werkstoff umfasst, welcher sich von einer ersten Längskante (12a) des ersten Teilabschnitts (8a) aus zur zweiten Längskante (12b) desselben erstreckt und mit diesen über eine flüssigkeitsdichte Klebeverbindung, insbesondere ein im Bereich der Längskanten (12a, 12b) von außen her auf die Außenseite des Schutzschlauchs (8) aufgeklebtes einseitig klebendes Klebeband (11c), oder eine thermische Schweißverbindung verbunden ist.

12. Auskleidungsschlauch nach Anspruch 11,
**dadurch gekennzeichnet,**
**dass** der dehnbare Verbindungsabschnitt (10) ein thermisch verschweißbares Kunststoffmaterial und einen Heizdraht (24) enthält, mittels welchem das Kunststosmaterial durchtrennbar ist.

13. Auskleidungsschlauch nach Anspruch 11 oder 12,
**dadurch gekennzeichnet,**
**dass** der zweite umfängliche Teilabschnitt (8b), bezogen auf den in einen Kanal eingezogenen Auskleidungsschlauch (1), im Bereich der Oberseite des Auskleidungsschlauchs verläuft.

14. Auskleidungsschlauch nach einem der vorhergehenden Ansprüche,
**dadurch gekennzeichnet,**
**dass** der nicht dehnbare Werkstoff des Schutzschlauchs (8) das Material einer LKW-Plane ist, das insbesondere mit einer Reibung vermindernden Beschichtung versehen ist.

15. Auskleidungsschlauch nach einem der vorhergehenden Ansprüche,
**dadurch gekennzeichnet,**
**dass** zwischen dem Außenfolienschlauch (4) und der Innenseite des Schutzschlauchs (8) ein Gleitmittel eingebracht ist und/oder dass die Innenseite des Schutzschlauchs (8) und die Außenseite des Außenfolienschlauchs (4) mit einer reibungsvermindernden Beschichtung versehen sind.

16. Auskleidungsschlauch nach einem der vorhergehenden Ansprüche,
**dadurch gekennzeichnet,**
**dass** der Schutzschlauch (8) eine oder mehrere Teilbahnen (8a, 8b) aus nicht dehnbarem Werkstoff umfasst, die an ihren Längskanten miteinander verbunden sind.

## Claims

1. Pipe liner (1) for the renovation of sewers with a reinforcement layer (2), impregnated with a light-curable reactive resin and expandable in a circumferential direction, and an outer film sleeve (4) enclosing the reinforcement layer (2), said film sleeve consisting of a material, preferably made of a liquid- and gas-tight plastic film, expandable in a radial direction and impermeable to UV light, wherein the pipe liner (1) can be inserted into a sewer being renovated and can be expanded in particular by means of compressed air so that, before the curing of the reactive resin, the reinforcement layer (2) and the outer film sleeve (4) contact the inner wall of the sewer.
**characterised in that**
a protective sleeve (8) comprising a tear-resistant material is arranged around the outer film sleeve (4), said protective sleeve having a connecting section (10) extending in a longitudinal direction of the outer film sleeve (4), wherein the connecting section is expandable in a circumferential direction by introducing compressed air into the pipe liner (1).

2. Pipe liner according to claim 1,
**characterised in that**
the protective sleeve (8) is secured on the outer side of the outer film sleeve (4) along a contact section (16) extending at least in part in a longitudinal direction of the pipe liner (1).

3. Pipe liner according to claim 2,
**characterised in that**
the contact section (16) comprises a double-sided adhesive strip (16a) and/or an adhesive seam and/or a thermal welding seam which runs in the region of the underside (14) of the pipe liner in relation to the pipe liner when it is pulled into a sewer.

4. Pipe liner according to one of the claims 1 to 3,
**characterised in that**
the tear-resistant material of the protective sleeve is passed over itself in an overlapping region (18) in the region of its longitudinal sections (12a, 12b), and that the expandable connecting section (10) comprises a predetermined tearing location (20) extending longitudinally along the pipe liner (1), along which tearing location the longitudinal sections (12a, 12b) of the protective sleeve (8) are connected together to be substantially liquid-tight before the pipe liner (1) is expanded.

5. Pipe liner according to claim 4,
**characterised in that**
the predetermined tearing location (20) contains a one-sided adhesive strip (11c) or a double-sided adhesive strip (11a, 11b) glued to the outer side of the protective sleeve (8) in the region of the longitudinal sections (12a, 12b), said adhesive strip being arranged along the overlapping region between the mutually adjacent sections (12a, 12b) of the tear-resistant material and connects these together.

6. Pipe liner according to claim 4,
**characterised in that**
the predetermined tearing location (20) contains a thermal welding seam (20c) or a bead of adhesive (20b) which connects the mutually adjacent sections of the overlapping regions (18) in a liquid-tight manner.

7. Pipe liner according to claim 6,
**characterised in that**
the thermal welding seam (20b) or bead of adhesive (20b) runs inside the overlapping region (18) in a wavy or zigzag pattern.

8. Pipe liner according to one of the claims 5 to 7,
**characterised in that**
the predetermined tearing location (20) contains a heating wire (24) and a material liquefiable under the effect of heat, in particular a hot-melt adhesive.

9. Pipe liner according to one of the claims 4 to 8,
**characterised in that**
the predetermined tearing location (20) comprises a longitudinal perforation (20a) made in the protective sleeve (8), said perforation being preferably made from one side only into the non-expandable material, penetrating it only partially or being covered by a flexible sealing compound to make it liquid-tight.

10. Pipe liner according to one of the claims 1 to 3,
**characterised in that**
the tear-resistant material of the protective sleeve (8) is passed over itself in an overlapping region in the region of its longitudinal sections (12a, 12b), and that the expandable connecting section (10) comprises a bead of sticky adhesive (22) extending in the longitudinal direction of pipe liner (1), said adhesive being round or oval in shape and rolling out between the mutually adjacent sections of the overlapping region during the expansion of the pipe liner in a circumferential direction.

11. Pipe liner according to one of the claims 1 to 3,
**characterised in that**
the non-expandable material of the protective sleeve (8) extends just around a first circumferential partial section (8a) of the outer film sleeve (4) and that the protective sleeve (8) comprises a second circumferential partial section (8b) made from an expandable or non-expandable material, which extends out from a first longitudinal edge (12a) of the first partial section (8a) to the second longitudinal edge (12b) of the same partial section and is connected to it by means of a liquid-tight adhesive joint, in particular a one-sided adhesive strip (11c), or thermal welding joint, glued in the region of the longitudinal edges (12a, 12b) from the outside to the outer side of the protective sleeve (8).

12. Pipe liner according to claim 11,
**characterised in that**
the expandable connecting section (10) contains a thermally weldable plastic material and a heating wire (24) by means of which the plastic material can be severed.

13. Pipe liner according to claim 11 or 12,
**characterised in that**
the second circumferential partial section (8b) runs in the region of the upper side of the pipe liner in relation to the pipe liner (1) when it is pulled into a sewer.

14. Pipe liner according to one of the preceding claims,
**characterised in that**
the non-expandable material of the protective sleeve (8) is a truck tarpaulin material which is provided with, in particular, a friction-reducing coating.

15. Pipe liner according to one of the preceding claims,
**characterised in that,**
between the outer film sleeve (4) and the inner side of the protective sleeve (8), a lubricant is applied and/or that the inner side of the protective sleeve (8) and the outer side of the outer film sleeve (4) are provided with a friction-reducing coating.

16. Pipe liner according to one of the preceding claims,
**characterised in that**
the protective sleeve (8) comprises one or a multiplicity of partial lengths (8a, 8b) of non-expandable material which are connected together at their longitudinal edges.

## Revendications

1. Gaine de chemisage (1) destinée à la rénovation de canalisations, comprenant une couche de renforcement (2) extensible dans la direction circonférentielle et imprégnée d'une résine réactive photodurcissable ainsi qu'un film tubulaire extérieur (4) entourant la couche de renforcement (2), qui est constitué d'un matériau radialement extensible ne laissant pas passer la lumière UV, en particulier d'un film plastique étanche au liquide et au gaz, la gaine de chemisage (1) pouvant être introduite dans une canalisation à rénover et notamment être dilatée à l'air comprimé, de sorte que la couche de renforcement (2) et le film tubulaire extérieur (4) s'appliquent contre la paroi intérieure de la canalisation avant le durcissement de la résine réactive,
**caractérisée en ce que**
une gaine de protection (8) constituée d'un matériau résistant à la déchirure est disposée autour du film tubulaire extérieur (4), laquelle gaine comprend une partie de liaison (10) qui s'étend dans le sens longitudinal du film tubulaire extérieur (4) et qui est extensible dans la direction circonférentielle par l'introduction d'air comprimé dans la gaine de chemisage (1).

2. Gaine de chemisage selon la revendication 1,
**caractérisée en ce que**
la gaine de protection (8) est fixée sur le côté extérieur du film tubulaire extérieur (4), le long d'une partie de contact (16) qui s'étend au moins en partie dans le sens longitudinal de la gaine de chemisage (1).

3. Gaine de chemisage selon la revendication 2,
**caractérisée en ce que**
la partie de contact (16) comprend un ruban adhésif double face (16a) et/ou un cordon de colle et/ou un cordon de soudure thermique qui, par rapport à la gaine de chemisage (1) insérée dans une canalisation, est réalisé dans la région du côté inférieur (14) de la gaine de chemisage.

4. Gaine de chemisage selon l'une des revendications 1 à 3,
**caractérisée en ce que**
le matériau résistant à la déchirure de la gaine de protection, au niveau de ses parties longitudinales (12a, 12b), est guidé avec superposition dans une zone de recouvrement (18), et **en ce que** la partie de liaison extensible (10) comprend un point destiné à la déchirure (20) s'étendant dans le sens longitudinal, le long duquel les parties longitudinales (12a, 12b) de la gaine de protection (8) sont reliées entre elles de manière sensiblement étanche au liquide avant la dilatation de la gaine de chemisage (1).

5. Gaine de chemisage selon la revendication 4,
**caractérisée en ce que**
le point destiné à la déchirure (20) comporte un ruban adhésif simple face (11 c) collé sur le côté extérieur de la gaine de protection (8) au niveau des parties longitudinales (12a, 12b), ou bien comprend un ruban adhésif double face (11a, 11b), qui est disposé le long de la zone de recouvrement entre lesdites parties (12a, 12b) contiguës du matériau résistant à la déchirure et qui fixe celles-ci l'une sur l'autre.

6. Gaine de chemisage selon la revendication 4,
**caractérisée en ce que**
le point destiné à la déchirure (20) comprend un cordon de soudure thermique (20c) ou un cordon de colle (20b), qui relie entre elles de manière étanche au liquide les parties contiguës des zones de recouvrement (18).

7. Gaine de chemisage selon la revendication 6,
**caractérisée en ce que**
le cordon de soudure thermique (20b) ou cordon de colle (20b) est réalisé à l'intérieur de la zone de recouvrement (18) en forme de ligne ondulée ou en zigzag.

8. Gaine de chemisage selon l'une des revendications 5 à 7,
**caractérisée en ce que**
le point destiné à la déchirure (20) contient un fil chauffant (24) et un matériau susceptible de se liquéfier sous l'effet de la chaleur, en particulier un adhésif thermofusible.

9. Gaine de chemisage selon l'une des revendications 4 à 8,
**caractérisée en ce que**
le point destiné à la déchirure (20) comprend une perforation longitudinale (20a) pratiquée dans la gaine de protection (8), perforation qui de préférence est pratiquée depuis un seul côté dans le matériau non extensible et pénètre celui-ci seulement partiellement ou qui est recouverte de manière étanche au liquide par un produit d'étanchéité élastique.

10. Gaine de chemisage selon l'une des revendications 1 à 3,
**caractérisée en ce que**
le matériau résistant à la déchirure de la gaine de protection (8), au niveau de ses parties longitudinales (12a, 12b), est guidé avec superposition dans une zone de recouvrement, et **en ce que** la partie de liaison extensible (10) comprend un cordon de colle (22) s'étendant dans le sens longitudinal de la gaine de chemisage (1) et constitué d'une colle permanente, lequel cordon de colle est de forme circulaire ou ovale en coupe transversale et se déroule entre les parties contiguës de la zone de recouvrement lors de la dilatation de la gaine de chemisage.

11. Gaine de chemisage selon l'une des revendications 1 à 3,
**caractérisée en ce que**
le matériau non extensible de la gaine de protection (8) s'étend uniquement autour d'une première portion partielle circonférentielle (8a) du film tubulaire extérieur (4), et **en ce que** la gaine de protection (8) comprend une seconde portion partielle circonférentielle (8b) constituée d'un matériau extensible ou non, laquelle s'étend depuis un premier bord longitudinal (12a) de ladite première portion (8a) vers le second bord longitudinal (12b) de celle-ci et est reliée auxdits bords par un joint collé étanche au liquide, en particulier un ruban adhésif simple face (11c) collé depuis l'extérieur sur le côté extérieur de la gaine de protection (8) au niveau des bords longitudinaux (12a, 12b), ou par un joint de soudure thermique.

12. Gaine de chemisage selon la revendication 11,
**caractérisée en ce que**
la partie de liaison extensible (10) contient une matière plastique thermosoudable et un fil chauffant (24) au moyen duquel la matière plastique peut être sectionnée.

13. Gaine de chemisage selon la revendication 11 ou 12,
**caractérisée en ce que**
la seconde portion partielle circonférentielle (8b), par rapport à la gaine de chemisage (1) insérée dans une canalisation, est réalisée dans la région du côté supérieur de la gaine de chemisage.

14. Gaine de chemisage selon l'une des revendications précédentes,
**caractérisée en ce que**
le matériau non extensible de la gaine de protection (8) est le matériau d'une bâche de camion, matériau en particulier pourvu d'un revêtement réduisant le frottement.

15. Gaine de chemisage selon l'une des revendications précédentes,
**caractérisée en ce que**
un lubrifiant est introduit entre le film tubulaire extérieur (4) et le côté intérieur de la gaine de protection (8), et/ou le côté intérieur de la gaine de protection (8) et le côté extérieur du film tubulaire extérieur (4) sont pourvus d'un revêtement réduisant le frottement.

16. Gaine de chemisage selon l'une des revendications précédentes,
**caractérisée en ce que**
la gaine de protection (8) comprend une ou plusieurs bandes partielles (8a, 8b) en matériau non extensible, qui sont reliées entre elles au niveau de leurs bords longitudinaux.
